# FASCICULE DE BREVET EUROPEEN

(11) **EP 2 936 031 B1**
(45) Date de publication et mention de la délivrance du brevet: **15.03.2017**
(21) Numéro de dépôt: 13803021.8
(22) Date de dépôt: 12.12.2013
(51) Int. Cl.: F28F 3/02, F28D 1/03, F28D 20/00, F28D 20/02, F28F 3/06

(54) **ÉLEMENT D'ECHANGE THERMIQUE, ET ECHANGEUR THERMIQUE CORRESPONDANT**
WÄRMETAUSCHERELEMENT UND ENTSPRECHENDER WÄRMETAUSCHER
HEAT EXCHANGE ELEMENT AND CORRESPONDING HEAT EXCHANGER

(30) Priorité: 20.12.2012 FR 1262447
(43) Date de publication de la demande: 28.10.2015
(73) Titulaire: Valeo Systemes Thermiques, 78320 Le Mesnil-Saint-Denis Cedex (FR)
(72) Inventeur: BELLENFANT, Aurélie, F-72210 Roeze Sur Sarthe (FR); ROBILLON, Lionel, F-72230 Mulsanne (FR); TOURNEUX, Fabienne, F-72000 Le Mans (FR)
(74) Mandataire: Metz, Gaëlle
(86) Numéro de dépôt international: PCT/EP2013/076406
(87) Numéro de publication internationale: WO 2014/095577

(56) Documents cités:
- EP-A1- 0 234 942
- EP-A1- 1 817 534
- FR-A1- 2 918 166
- JP-A- H06 213 532
- JP-A- 2010 216 700

## Description

L'invention a trait à un échangeur thermique, par exemple utilisé dans le domaine automobile et plus particulièrement à un échangeur thermique comprenant une pluralité de canaux de circulation de fluide caloporteur. L'invention concerne en particulier un élément d'échange thermique pour un tel échangeur thermique.

Un échangeur thermique a pour fonction d'assurer un échange thermique entre un fluide en circulation à l'intérieur d'une pluralité de canaux, appelé fluide caloporteur, et un fluide extérieur traversant l'échangeur thermique. Dans le cas d'un système de climatisation de véhicule automobile, le fluide extérieur peut être un flux gazeux tel que de l'air destiné à être soufflé dans l'habitacle du véhicule. L'échange thermique permet de rafraîchir l'air soufflé.

Les canaux débouchent classiquement dans des collecteurs qui ont notamment pour fonction de mettre en communication de fluide tout ou partie de cette pluralité de canaux.

L'échangeur thermique est relié au reste d'un circuit de circulation de fluide, par exemple un circuit de climatisation pour véhicule automobile. La circulation du fluide à l'intérieur du circuit est assurée par un compresseur entraîné directement par le moteur du véhicule automobile.

Par conséquent, lorsque le moteur du véhicule est arrêté, la circulation du fluide dans le circuit n'a plus lieu, et l'échange thermique entre l'air et le fluide caloporteur ne peut s'opérer. L'air soufflé dans l'habitacle du véhicule n'est alors plus rafraîchi. Cette situation est d'autant plus problématique que des systèmes d'économie de carburant récents prévoient l'arrêt automatique du moteur lorsque la voiture s'immobilise, privant fréquemment l'habitacle d'air rafraîchi.

Il est connu de pourvoir un échangeur thermique de réservoirs de matériau de stockage thermique en contact avec les canaux de circulation de fluide caloporteur de manière que le matériau de stockage et le fluide caloporteur échangent de la chaleur entre eux.

Ainsi, lorsque le moteur du véhicule est en marche, le fluide réfrigérant refroidit à la fois l'air traversant l'échangeur thermique et le matériau de stockage thermique. Le matériau de stockage thermique restitue le froid (plus précisément des frigories) à l'air traversant l'échangeur thermique, lorsque le moteur est coupé.

Selon une solution connue, l'échangeur thermique comprend une pluralité d'éléments d'échange thermique formés d'au moins une première plaque et une deuxième plaque, et d'une plaque de séparation intercalée entre les première et deuxième plaques.

Les première et deuxième plaques présentent respectivement au moins un canal de circulation du fluide caloporteur et au moins un réservoir du matériau de stockage thermique. La plaque de séparation présente quant à elle une pluralité d'orifices permettant de mettre en communication le ou les canaux de circulation de la première plaque respectivement avec un canal de la deuxième plaque, ou de mettre en communication les réservoirs des deux plaques.

Les première et deuxième plaques peuvent être identiques et par exemple agencées en opposition.

En particulier, les canaux des plaques peuvent définir des ondulations ou oscillations et dans ce cas le ou les canaux d'une plaque présentent des oscillations en opposition de phase avec les oscillations du ou des canaux en vis-à-vis de l'autre plaque.

Un tel élément d'échange thermique est divulgué dans EP 1 817 534 A1.

Toutefois, la plaque de séparation a tendance à se déformer lorsqu'elle est soumise à une pression provoquée par l'écoulement du fluide dans l'évaporateur. En particulier, des déformations peuvent apparaître au niveau des zones incurvées des ondulations ou oscillations des canaux de circulation.

Ces déformations ne sont pas homogènes et peuvent être plus ou moins importantes en fonction du niveau de pression et/ou de la durée pendant laquelle la plaque de séparation est soumise à une pression.

Du fait de ces déformations non homogènes la performance de l'échangeur est affectée.

L'invention a donc pour objectif d'obtenir un échangeur thermique avec une performance stabilisée.

À cet effet, l'invention a pour objet un élément d'échange thermique comprenant :
- au moins une première plaque et une deuxième plaque, la première plaque présentant au moins un premier canal destiné à la circulation d'un premier fluide s'étendant en formant des ondulations, et la deuxième plaque présentant au moins un second canal destiné à la circulation du premier fluide s'étendant en formant des ondulations, et
- une plaque de séparation intercalée entre les première et deuxième plaques, caractérisé en ce que la plaque de séparation présente :
- un nombre prédéfini de déformations respectivement agencées au niveau des zones incurvées d'une ondulation d'un premier ou d'un second canal de circulation.

Ainsi, la plaque de séparation est pré-déformée au niveau des zones de plus fortes sollicitations, de façon à calibrer la performance de l'échangeur.

En effet, les déformations sont réalisées au lieu des déformations naturelles mais de façon homogène. Ainsi, en réalisant des déformations, par exemple maximales par rapport aux déformations naturelles, la performance est stabilisée et les variations de performances en fonction des conditions de pression sont réduites voire supprimées.

Ledit élément d'échange thermique peut en outre comporter une ou plusieurs caractéristiques suivantes, prises séparément ou en combinaison :
- lesdites première et deuxième plaques présentent respectivement au moins un réservoir pour un matériau de stockage thermique en contact avec ledit au moins un premier ou second canal de circulation pour un échange thermique entre le matériau de stockage et le premier fluide, et la plaque de séparation comprend au moins une série d'orifices mettant en communication lesdits canaux et/ou lesdits réservoirs des première et deuxième plaques ;
- lesdites déformations et lesdits orifices sont intercalés ;
- ledit élément d'échange thermique comprend :
   - une pluralité de premières déformations orientées vers la première plaque et agencées au niveau des zones incurvées des ondulations d'un premier canal de circulation, et
   - une pluralité de deuxièmes déformations orientées vers la deuxième plaque et agencées au niveau des zones incurvées des ondulations d'un second canal de circulation ;
- les ondulations d'un premier canal et d'un second canal en vis-à-vis sont en opposition de phase, et dans lequel les premières déformations décrivent un trajet oscillant en opposition de phase avec le trajet oscillant décrit par les deuxièmes déformations ;
- ledit élément d'échange thermique comprend des déformations formées sur au moins une extrémité de la plaque de séparation ;
- ledit élément d'échange thermique comprend au moins une troisième déformation formée sur au moins une extrémité de la plaque de séparation au niveau du début d'ondulation d'un premier canal, et au moins une quatrième déformation formée sur au moins une extrémité de la plaque de séparation au niveau du début d'ondulation d'un second canal ;
- les troisième et quatrième déformations présentent des dimensions inférieures aux dimensions des premières et deuxièmes déformations ;
- les déformations présentent une forme sensiblement en haricot ;
- les déformations sont en saillies par rapport au plan de la plaque de séparation ;
- les déformations sont réalisées par emboutissage ;
- au moins certaines déformations présentent une protubérance ;
- ladite protubérance est sensiblement en forme de têton ;
- lesdits canaux s'étendent respectivement selon une forme sensiblement en « I » ou en « U » ;
- lesdites première et deuxième plaques présentent respectivement deux canaux de circulation de fluide s'étendant en formant des ondulations, et les ondulations desdits deux canaux sont complémentaires.

L'invention a aussi pour objet un échangeur thermique entre au moins des premier et deuxième fluides, comportant un faisceau pourvu d'au moins un élément d'échange thermique tel que défini précédemment.

Selon un aspect de l'invention, ledit échangeur est utilisé comme évaporateur dans un circuit de climatisation.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue en perspective d'un échangeur thermique selon l'invention,
- la figure 2A est une vue en perspective éclatée d'un élément d'échange thermique selon un premier mode de réalisation,
- la figure 2B est une vue en perspective éclatée d'un élément d'échange thermique selon un deuxième mode de réalisation,
- la figure 3 est une vue en perspective d'un intercalaire de l'échangeur thermique de la figure 1,
- la figure 4 représente de façon schématique et simplifiée les canaux de circulation d'un fluide caloporteur de deux plaques de l'élément d'échange thermique de la figure 3,
- la figure 5 représente de façon schématique et simplifiée les réservoirs d'un matériau de stockage thermique,
- la figure 6 représente une plaque de séparation de l'élément d'échange thermique selon un premier mode de réalisation,
- la figure 7 représente un deuxième mode de réalisation de la plaque de séparation, et
- la figure 8 représente un troisième mode de réalisation de la plaque de séparation.

Dans ces figures, les éléments sensiblement identiques portent les mêmes références.

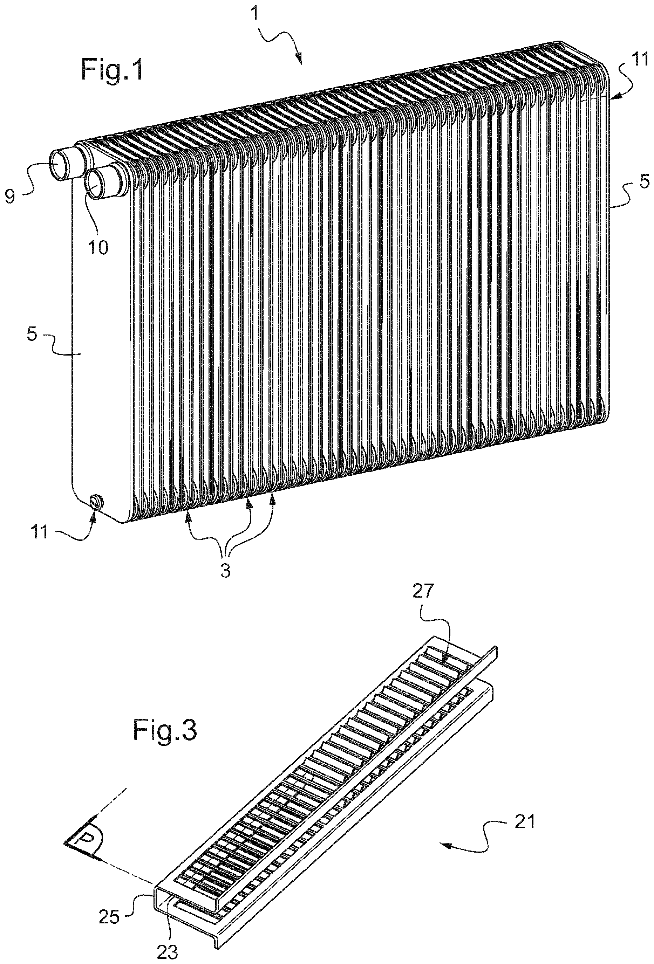

La figure 1 est une vue schématique d'un échangeur thermique selon l'invention. Cet échangeur thermique peut être notamment utilisé en tant qu'évaporateur d'un circuit de climatisation d'un véhicule automobile.

En fonctionnement, l'échangeur thermique 1 permet un échange thermique entre un premier fluide, tel qu'un fluide caloporteur, et un deuxième fluide, tel qu'un flux gazeux comme un flux d'air traversant l'échangeur thermique 1.

Selon l'exemple illustré, l'échangeur thermique 1 présente une forme générale sensiblement parallélépipédique.

L'échangeur thermique 1 comprend un faisceau d'éléments d'échange thermique 3, destinés à contenir d'une part un fluide caloporteur et d'autre part un matériau de stockage thermique.

Le fluide caloporteur peut être un fluide réfrigérant, par exemple du R134a.

Le matériau de stockage thermique peut être un matériau de stockage de thermique tel qu'un matériau de stockage de frigories. qui est par exemple un matériau connu sous le sigle PCM pour l'anglais « Phase Change Material ».

Le faisceau comprend un empilement successif d'éléments d'échange thermique 3 disposés alignés.

Ce faisceau présente en outre selon le mode de réalisation illustré deux plaques de fermeture 5 à ses extrémités longitudinales de part et d'autre des éléments d'échange thermique 3. Au moins l'une des plaques de fermeture 5 présente au moins un orifice qui débouche dans une tubulure 9 ou 10 pour l'alimentation ou le refoulement en fluide caloporteur. Sur la figure 1, seule l'une des plaques de fermeture 5 comprend une tubulure d'entrée et une tubulure de sortie 9, 10.

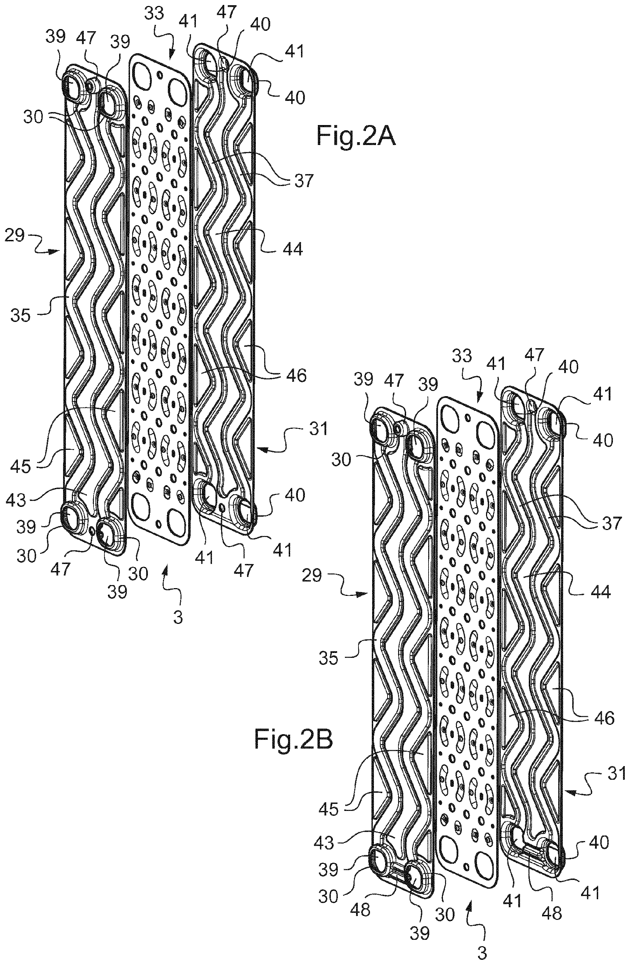

Les éléments d'échange thermique 3 sont reliés les uns aux autres en communication de fluide par l'intermédiaire de brides de jonction 30, 40 (visibles sur les figures 2A et 2B) ménagées sur les parties d'extrémité des plaques 29. Les brides de jonction 30, 40 sont issues de matière de préférence par emboutissage de sorte qu'elles forment respectivement un anneau faisant saillie hors du plan de la plaque et délimitant une ouverture 39, 41.

L'échangeur 1 peut comprendre en outre des intercalaires d'échange thermique 21 (cf figure 3), disposés à chaque fois entre deux éléments d'échange thermique 3 adjacents. Ici, un intercalaire 21 est à chaque fois disposé dans l'espace laissé libre par la jonction entre deux éléments d'échange thermique 3. L'intercalaire 21 a pour fonction d'augmenter la surface d'échange thermique entre un fluide caloporteur circulant dans les éléments d'échange thermique 3 et un flux gazeux, tel que le flux d'air extérieur qui traverse l'échangeur thermique 1.

Les intercalaires 21 peuvent être formés à partir d'un feuillard métallique, par exemple en alliage d'aluminium. Les éléments d'échange thermique 3 et les intercalaires 21 peuvent être brasés ensemble.

Les intercalaires 21 présentent par exemple une forme générale sensiblement ondulée.

En référence à la figure 3, un intercalaire 21 comprend un nombre prédéfini de parois planes 23. Les parois planes 23 sont sensiblement rectangulaires. Ces parois planes 23 sont sensiblement parallèles et sont reliées deux à deux par des plis 25. Dans le cas d'un intercalaire 21 ondulé comme dans l'exemple illustré, les plis 25 sont sensiblement arrondis et les parois planes 23 sont reliées deux à deux par des plis 25 de manière à former des ondulations alternées.

Les intercalaires 21 peuvent être fixés aux éléments d'échange 3 par leurs plis 25 respectifs, par exemple par brasage.

En outre, les parois planes 23 comportent une pluralité de persiennes 27 sensiblement inclinées par rapport au plan général P défini par les parois planes 23. Les persiennes 27 peuvent être réalisées par découpe et pliage du matériau métallique de l'intercalaire 21.

Les persiennes 27 définissent donc des ouvertures selon un angle d'ouverture donné, à travers lesquelles passe le flux gazeux, ce qui augmente la surface d'échange thermique. En outre, les persiennes 27 créent des perturbations du flux d'air traversant l'échangeur thermique 1, favorisant d'autant l'échange thermique.

On peut prévoir plusieurs groupes de persiennes 27, ici au nombre de deux, chaque groupe de persiennes présentant une orientation respective. Les persiennes 27 d'un même groupe peuvent être sensiblement identiques.

En se référant à nouveau aux figures 2A et 2B, un élément d'échange thermique 3 comprend une première plaque 29 et une deuxième plaque 31. Entre les première et deuxième plaques 29, 31, est intercalée une plaque de séparation 33.

Un élément d'échange thermique 3 est donc réalisé dans ce mode de réalisation par la juxtaposition de deux plaques 29, 31 et d'une plaque de séparation 33 intercalée.

La première 29 et la deuxième plaque 31 sont selon les exemples des figures 2A et 2B, sensiblement rectangulaires. La plaque de séparation 33 peut présenter une forme générale similaire aux premières 29 et deuxièmes plaques 31, sensiblement rectangulaire selon les exemples illustrés. L'élément d'échange thermique 3 présente selon les exemples de réalisation des figures 2A et 2B une forme générale de parallélépipède rectangle.

La première 29 et la deuxième plaque 31 peuvent être des plaques embouties. Les deux plaques embouties 29, 31 peuvent être réalisées à partir de plaques métalliques.

Les premières 29 et deuxièmes plaques 31 présentent respectivement au moins un canal de circulation du fluide caloporteur. Selon l'exemple illustré, la première plaque 29 présente deux premiers canaux 35 de circulation du fluide caloporteur et la deuxième plaque 31 présente deux seconds canaux 37 de circulation du fluide caloporteur.

Les premiers 35 et seconds 37 canaux peuvent être conformés par emboutissage dans une plaque de tôle métallique.

Les premiers 35 et seconds 37 canaux peuvent être de forme analogue et présentent, comme dans l'exemple de la figure 2A, une allure générale sensiblement en « **I** ». Selon la figure 2B qui représente une variante de réalisation d'un élément d'échange thermique, les premiers 35 et seconds 37 canaux peuvent être de forme analogue et présentent une allure générale sensiblement en « U ».

L'échangeur thermique 1 peut comprendre des éléments d'échange thermique 3 réalisés selon le mode de réalisation de la figure 2A ou 2B, voire certains éléments d'échange thermique 3 réalisés selon la figure 2A, et d'autres selon la figure 2B.

Bien entendu, on peut prévoir que les profils des premiers canaux 35 et seconds canaux 37 diffèrent l'un de l'autre.

Un canal 35, 37 de circulation de fluide peut s'étendre sensiblement sur la totalité de la longueur de l'élément d'échange thermique 3 pour obtenir une surface d'échange importante.

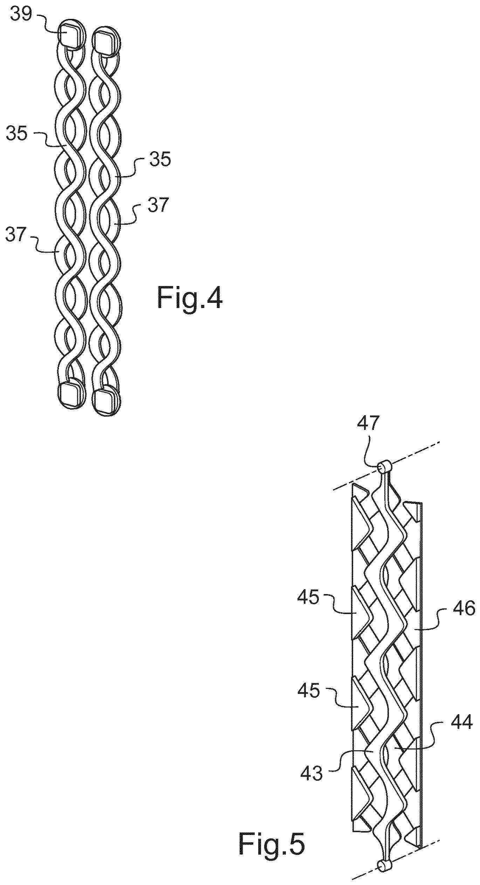

Chaque canal 35, 37 présente une série d'ondulations ou d'oscillations. Un canal 35 ou 37 définit donc un design en virages. L'enchaînement de virages peut définir un chemin sensiblement sinusoïdal comme cela est par exemple rendu visible sur les figures 2A, 2B et 4.

Pour augmenter encore les performances d'échange thermique, les oscillations peuvent être conformées de telle sorte que les oscillations de l'un des canaux d'une plaque soit sensiblement en phase avec les oscillations de l'autre canal de cette plaque. On entend par là que les ondulations des canaux d'une plaque varient de la même façon. Ainsi, les premiers canaux 35 de la première plaque 29 sont sensiblement en phase et les seconds canaux 37 de la deuxième plaque 31 sont sensiblement en phase.

Les première 29 et deuxième plaques 31 représentées sur la figure 2A sont identiques et sont disposées en opposition. De même, les première 29 et deuxième plaques 31 représentées sur la figure 2B sont identiques et sont disposées en opposition.

Ainsi, une fois assemblé l'élément d'échange thermique 3 présente des canaux 35, 37 dont les ondulations sont en opposition de phase, comme cela est mieux visible sur la figure 4. Autrement dit, une ondulation d'un premier canal 35 de la première plaque 29 orientée vers le bord le plus proche de la première plaque 29 est en vis-à-vis d'une ondulation d'un second canal 37 de la deuxième plaque 31 orientée vers le bord le plus éloigné de la deuxième plaque 31.

En se référant de nouveau à la figure 2A, les profils des premiers 35 et seconds 37 canaux s'élargissent à leurs extrémités de manière à former respectivement une extrémité sensiblement ovoïde.

Chaque élément d'échange thermique 3 comprend des orifices d'entrée ou de sortie 39, 41 pour le fluide caloporteur en communication de fluide avec les canaux de circulation de fluide 35, 37 via les extrémités des canaux 35, 37 selon l'exemple illustré. Les orifices d'entrée ou de sortie 39, 41 peuvent présenter une forme générale sensiblement oblongue, en particulier ovoïde, qui permet de limiter les pertes de charge lors de l'écoulement du fluide caloporteur.

Selon la figure 2A, les orifices d'entrée ou de sortie 39, 41 situés au niveau des extrémités d'un élément d'échange thermique 3 sont isolés. Les canaux de circulation de fluide 35, 37 sont ici de forme en « **I** ».

Selon la figure 2B, les orifices d'entrée ou de sortie 39, 41 situés à l'une des extrémités d'un élément d'échange thermique 3 sont isolés, tandis que ceux situés au niveau de l'extrémité opposée sont reliées par un canal de communication fluidique 48. Les canaux de circulation de fluide 35, 37 sont ici de forme en « U ».

Un élément d'échange thermique 3 présente selon les exemples illustrés sur les figures 2A et 2B, huit orifices d'entrée ou de sortie 39, 41 pour le fluide caloporteur, répartis quatre par quatre sur chaque face de l'élément. Les éléments d'échange thermique 3 présentent ici une allure générale de parallélépipède rectangle, et les quatre orifices d'entrée ou de sortie 39, 41 sont disposés aux quatre coins de chaque face d'un élément d'échange thermique 3.

Ces orifices 39, 41 d'un élément d'échange thermique 3 sont en communication de fluide avec les orifices des plaques de fermeture 5 qui débouchent dans les tubulures 9.

En outre, les première 29 et deuxième plaques 31 présentent respectivement au moins un réservoir 43,44, 45,46 du matériau de stockage thermique. Le ou les réservoirs 43, 44, 45, 46 sont agencés en contact avec au moins un premier canal 35 ou un second canal 37 de circulation pour un échange thermique entre le matériau de stockage et le fluide caloporteur.

Selon le mode de réalisation décrit, les première 29 et deuxième plaques 31 présentent respectivement entre les deux canaux de circulation 35, 37 un réservoir central 43, 44. Le réservoir central 43 ou 44 présente une forme générale complémentaire de l'allure de chacun des canaux 35 ou 37 d'une plaque 29 ou 31.

Le réservoir central 43 ou 44 est un réservoir de stockage d'un matériau de stockage thermique, en particulier capable d'emmagasiner des frigories, tels que les matériaux à changement de phase, connus sous le sigle PCM pour l'anglais « Phase Change Material ».

Chaque élément d'échange thermique 3 comprend en outre au moins un conduit de passage 47 traversant cet élément d'échange thermique 3 et permettant le remplissage en matériau de stockage thermique d'au moins un réservoir, ici les réservoirs centraux 43, 44. Ce conduit de passage 47 est dépourvu de toute communication de fluide avec les canaux de circulation de fluide 35, 37 de l'élément d'échange thermique 3 correspondant.

Chaque conduit de passage 47 communique fluidiquement avec des orifices 11 ménagés sur au moins l'une des plaques de fermeture 5 (cf figure 1). Sur le mode de réalisation de la figure 1, chaque plaque de fermeture 5 comprend un orifice 11 destiné au remplissage des réservoirs par le matériau de stockage thermique tel qu'un matériau à changement de phase PCM.

Chacune des première 29 et deuxième plaques 31 présentent en outre respectivement des réservoirs latéraux 45 et 46 extérieurs du matériau de stockage thermique.

Le terme « extérieur » est ici employé par opposition au réservoir central 43 ou 44 agencé entre les deux canaux 35 ou 37 d'une plaque 29 ou 31, un réservoir latéral 45 ou 46 extérieur est ici agencé sur le bord d'une plaque 29 ou 31.

Avantageusement, le réservoir central 43 ou 44, et les réservoirs supplémentaires latéraux 45 ou 46 extérieurs, sont agencés de manière à couvrir quasiment voire la totalité de la surface d'une plaque 29 ou 31 laissée libre par les canaux de circulation 35 ou 37 de fluide afin d'optimiser les capacités de stockage de l'échangeur 1.

Selon l'exemple illustré, la première plaque 29 présente un premier réservoir central 43 et des premiers réservoirs latéraux 45, et la deuxième plaque 31 présente un second réservoir central 44 et des seconds réservoirs latéraux 46.

La forme des premier 45 et second 46 réservoirs latéraux est pour partie complémentaire d'un canal de circulation de fluide 35 ou 37 et pour le reste, d'un bord de la première 29 ou de la deuxième plaque 31. Selon le mode de réalisation illustré sur les figures 2A et 2B, les réservoirs latéraux 45, 46 présentent respectivement une forme sensiblement triangulaire.

Selon le mode de réalisation illustré, la pluralité de premiers réservoirs latéraux 45 extérieurs est en communication de fluide avec le réservoir central 44 de la deuxième plaque 31 et la pluralité de seconds réservoirs latéraux 46 est en communication de fluide avec le réservoir central 43 de la première plaque 29. De plus, les premiers réservoirs latéraux 45 de la première plaque 29 sont en communication de fluide avec les seconds réservoirs latéraux 46 de la deuxième plaque 31. Cette mise en communication fluidique entre les réservoirs de stockage centraux 43, 44 et latéraux 45, 46 est prévue de sorte que le remplissage d'un réservoir central 43 assure également le remplissage des réservoirs latéraux 45, 46 et/ou réciproquement.

Les réservoirs 43 à 46 peuvent être mis en oeuvre dans un dispositif dit à stockage passif, c'est-à-dire dans lequel il n'y a pas de circulation du matériau de stockage thermique à l'intérieur des réservoirs 43 à 46, ou encore dans un dispositif dit à stockage actif, c'est-à-dire un dispositif dans lequel une circulation du matériau de stockage est assuré à l'intérieur des réservoirs 43 à 46.

Cette mise en communication fluidique entre les réservoirs de stockage centraux 43, 44 et latéraux 45, 46 est mieux visible sur la figure 5 correspondant au mode de réalisation de la figure 2A.

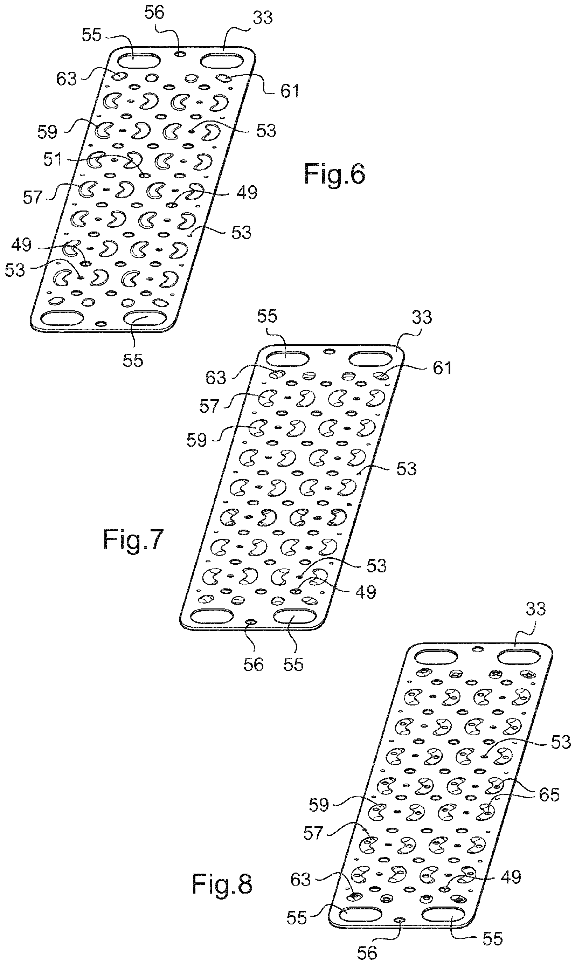

En référence à la figure 6, la plaque de séparation 33 présente quant à elle deux séries de premiers orifices 49. Ici, ces premiers orifices 49 sont disposés selon deux alignements suivant la hauteur de la plaque de séparation 33, ces alignements étant symétriques par rapport à une hauteur médiane de la plaque de séparation 33. Les premiers orifices sont disposés selon une disposition suivant l'allure générale du premier 35 ou du second 37 canal d'une plaque 29 ou 31.

Une fois les première 29 et deuxième plaques 31 apposées de part et d'autre de la plaque de séparation 33, les canaux de circulation de fluide 35, 37 des première 29 et deuxième plaques 31 sont mis en communication par l'intermédiaire des premiers orifices 49. Ainsi la répartition régulière des premiers orifices 49 assure une bonne communication de fluide.

En outre, la plaque de séparation 33 présente une série de second orifices 51 agencés de manière à mettre en communication de fluide les réservoirs centraux des première 29 et deuxième plaques 31. Ici, ces seconds orifices 51 sont disposés alignés selon la hauteur médiane de la plaque de séparation 33.

La plaque de séparation 33 comporte en outre des troisièmes orifices supplémentaires 53, par exemple sensiblement oblongs, qui se superposent à la fois à une partie des premier 43 et second 44 réservoirs centraux et à une partie des premiers 45 et seconds 46 réservoirs latéraux. Ainsi, ces orifices supplémentaires 53 permettent le remplissage des réservoirs en matériaux de stockage.

Les troisièmes orifices 53 délimitent les sommets d'un triangle qui est de forme sensiblement analogue à la forme des réservoirs latéraux 45 et 46 des première 29 et deuxième 31 plaques.

La plaque de séparation 33 peut encore présenter aux extrémités deux orifices 55 de forme correspondante à la forme des extrémités des canaux de circulation de fluide. Dans cet exemple, les orifices d'extrémité 55 de la plaque de séparation 33 sont de forme sensiblement ovoïdes correspondant au profil ovoïde des extrémités des canaux de circulation de fluide. Ces orifices d'extrémité 55 sont disposés en regard des orifices d'entrée ou de sortie 39 ou 41, respectivement des premières plaques 29 et des deuxièmes plaques 31, à l'état monté de l'élément d'échange thermique 3.

La plaque de séparation 33 présente en outre un orifice 56 agencé de façon à être en communication avec le conduit de passage 47 des premières et deuxièmes plaques 29 et 31 pour permettre le remplissage en matériau de stockage thermique.

Comme cela est mieux visible sur la figure 6, la plaque de séparation 33 comprend en outre un nombre prédéfini de déformations 57, 59, 61, 63 respectivement agencées au niveau d'une ondulation d'un premier 35 ou d'un second 37 canal de circulation.

Les déformations 57, 59 présentent selon le mode de réalisation décrit une forme sensiblement en haricot. Ces formes en haricot correspondent aux zones incurvées des oscillations des canaux 35, 37 de circulation de fluide. Ces formes en haricot suivent donc naturellement le virage des oscillations des canaux 35, 37 de circulation de fluide.

Les déformations sont respectivement orientées vers un canal de circulation 35 ou 37 de l'une ou l'autre des première 29 et deuxième 31 plaques. Ainsi, la plaque de séparation 33 présente une pluralité de premières déformations 57 orientées vers la première plaque 29 et agencées au niveau des ondulations d'un premier canal de circulation 35, et une pluralité de deuxièmes déformations 59 orientées vers la deuxième plaque 31 et agencées au niveau des ondulations d'un second canal de circulation 37.

Ces déformations 57, 59, 61, 63 sont par exemple réalisées par emboutissage.

Ces déformations 57, 59, 61, 63 sont en saillies par rapport au plan général défini par la plaque de séparation 33. Ainsi sur chaque face opposée de la plaque de séparation 33 les déformations 57, 59, 61, 63 forment une alternance de creux et de bosses sur cette face.

Comme dit précédemment, les ondulations d'un premier canal 35 et d'un second canal 37 en vis-à-vis sont selon le mode de réalisation décrit en opposition de phase. Ainsi, les premières déformations 57 décrivent un trajet oscillant qui suit les oscillations d'un premier canal 35 et ainsi en opposition de phase avec le trajet oscillant décrit par les deuxièmes déformations 59 et qui suivent les oscillations d'un second canal 37.

De plus, selon le mode de réalisation décrit une plaque 29, 31 comprend deux canaux 35, 37 dont les oscillations sont en phase. La plaque de séparation 33 présente en conséquence deux séries de premières déformations 57 évoluant de façon similaire. De même, la plaque de séparation 33 présente deux séries de deuxièmes déformations 59 évoluant de façon similaire. Une série de deuxièmes déformations 59 est intercalée entre les deux séries de premières déformations 57, et une série de premières déformations 57 est intercalée entre les deux séries de deuxièmes déformations 59.

Les premières 57 et deuxièmes 59 déformations peuvent présenter les mêmes dimensions, notamment de taille et de profondeur.

La plaque de séparation 33 peut également comprendre des déformations 61, 63 formées sur au moins une extrémité de la plaque de séparation 33. Dans l'exemple illustré, les déformations 61, 63 sont réalisées aux deux extrémités longitudinales de la plaque de séparation 33.

Ces déformations 61, 63 sont également agencées au niveau d'une zone incurvée d'un canal 35 ou 37 de circulation, et plus précisément au début du trajet oscillant du canal 35 ou 37, autrement dit au niveau du premier virage du canal 35 ou 37.

Selon l'exemple illustré, la plaque de séparation 33 présente au moins une troisième déformation 61 formée sur au moins une extrémité de la plaque de séparation 33 au niveau du début d'ondulation ou du premier virage d'un premier canal 35, et au moins une quatrième déformation 63 formée sur au moins une extrémité de la plaque de séparation 33 au niveau du début d'ondulation ou du premier virage d'un second canal 37.

Les troisième 61 et quatrième 63 déformations présentent des dimensions inférieures, notamment en taille et en profondeur, aux dimensions des premières 57 et deuxièmes 59 déformations.

Les déformations 57, 59, 61, 63 peuvent en outre présenter des bords sensiblement arrondis comme dans l'exemple illustré sur la figure 7.

Par ailleurs, selon un troisième mode de réalisation illustré sur la figure 8, au moins certaines des déformations présentent une protubérance 65. Dans cet exemple toutes les déformations 57, 59, 61, 63 présentent une protubérance 65. Cette protubérance 65 peut être sensiblement en forme de têton.

La protubérance 65 est agencée sensiblement au milieu de la déformation 57, 59, 61, 63, qui correspond au lieu des plus fortes contraintes lorsque la plaque de séparation 33 est soumise à une pression.

Cette protubérance 65 est par exemple brasée sur la première 29 ou deuxième 31 plaque en vis-à-vis.

Dans ce troisième mode de réalisation, les déformations 57, 59, 61, 63 réalisées par emboutissage peuvent présenter également des bords sensiblement arrondis.

Par ailleurs, comme dit précédemment la plaque de séparation 33 comporte au moins une série d'orifices pour la mise en communication des canaux 35, 37 et/ou des réservoirs centraux 43, 44, latéraux 45, 46. Les déformations et ces orifices sont intercalés.

En particulier, les premiers orifices 49 pour la mise en communication d'un canal 35, 37 de chaque plaque 29, 31 sont disposés entre une série de première déformations 57 et une série de deuxièmes déformations 59 en vis-à-vis.

Les seconds orifices 51 pour la mise en communication des réservoirs centraux 43, 44 des première 29 et deuxième plaques 31 et alignés selon la hauteur médiane de la plaque de séparation 33, sont agencés entre les deux séries de premières et deuxièmes déformations 57, 59.

Par ailleurs, selon l'exemple illustré les troisièmes orifices supplémentaires 53, par exemple sensiblement oblongs, pour le remplissage des réservoirs 45, 46 en matériaux de stockage des première et deuxième plaques 29 et 31, définissent sensiblement les sommets d'un triangle autour d'une première 57 ou deuxième 59 déformation sur le bord de la plaque de séparation 33.

Du fait de ces déformations, et de préférence des déformations selon le troisième mode de réalisation dont les bords sont arrondis et avec un têton 65, on obtient une plaque qui ne se déforme pas ou très peu au-delà de la forme donnée.

On calibre ainsi et on stabilise la performance de l'échangeur thermique 1, de façon à réduire les variations liées aux conditions de pression.

En outre, la plaque de séparation 33 pré-déformée aux endroits les plus sollicités, subit moins de déformations, ce qui peut permettre de réduire les épaisseurs matière de départ pour obtenir un échangeur thermique 1 plus compact. Le poids et le coût de l'échangeur thermique 1 peuvent ainsi être réduits.

## Revendications

1. Élément d'échange thermique comprenant :
- au moins une première plaque (29) et une deuxième plaque (31), la première plaque (29) présentant au moins un premier canal (35) de circulation du premier fluide de forme générale sensiblement ondulée, et la deuxième plaque (31) présentant au moins un second canal (37) de circulation du premier fluide de forme générale sensiblement ondulée, et
- une plaque de séparation (33) intercalée entre les première (29) et deuxième plaques (31),
**caractérisé en ce que** la plaque de séparation (33) présente :
- un nombre prédéfini de déformations (57, 59, 61, 63) respectivement agencées au niveau des zones incurvées d'une ondulation d'un premier (35) ou d'un second (37) canal de circulation.

2. Élément d'échange thermique (3) selon la revendication 1, dans lequel :
- lesdites première (29) et deuxième plaques (31) présentent respectivement au moins un réservoir (43, 44, 45, 46) pour un matériau de stockage thermique en contact avec ledit au moins un premier (35) ou second (37) canal de circulation pour un échange thermique entre le matériau de stockage et le premier fluide, et dans lequel
- la plaque de séparation (33) comprend au moins une série d'orifices (49, 51, 53) mettant en communication lesdits canaux (35, 37) et/ou lesdits réservoirs (43, 44, 45, 46) des première (29) et deuxième (31) plaques.

3. Élément d'échange thermique (3) selon la revendication 2, dans lequel lesdites déformations (57, 59, 61, 63) et lesdits orifices (49, 51, 53) sont intercalés.

4. Élément d'échange thermique (3) selon l'une quelconque des revendications précédentes, comprenant :
- une pluralité de premières déformations (57) orientées vers la première plaque (29) et agencées au niveau des zones incurvées des ondulations d'un premier canal de circulation (35),
et
- une pluralité de deuxièmes déformations (59) orientées vers la deuxième plaque (31) et agencées au des zones incurvées des ondulations d'un second canal (37) de circulation.

5. Élément d'échange thermique (3) selon la revendication précédente, dans lequel les ondulations d'un premier canal (35) et d'un second canal (37) en vis-à-vis sont en opposition de phase, et dans lequel les premières déformations (57) décrivent un trajet oscillant en opposition de phase avec le trajet oscillant décrit par les deuxièmes déformations (59).

6. Élément d'échange thermique (3) selon l'une quelconque des revendications précédentes, comprenant des déformations (61, 63) formées sur au moins une extrémité de la plaque de séparation (33).

7. Élément d'échange thermique (3) selon les revendications 4 et 6, comprenant au moins une troisième déformation (61) formée sur au moins une extrémité de la plaque de séparation (33) au niveau du début d'ondulation d'un premier canal (35), et au moins une quatrième déformation (63) formée sur au moins une extrémité de la plaque de séparation (33) au niveau du début d'ondulation d'un second canal (37).

8. Élément d'échange thermique (3) selon la revendication précédente, dans lequel les troisième (61) et quatrième (63) déformations présentent des dimensions inférieures aux dimensions des premières (57) et deuxièmes (59) déformations.

9. Élément d'échange thermique (3) selon l'une quelconque des revendications précédentes, dans lequel les déformations (57, 59) présentent une forme sensiblement en haricot.

10. Élément d'échange thermique (3) selon l'une quelconque des revendications précédentes, dans lequel les déformations (57, 59, 61, 63) sont en saillies par rapport au plan de la plaque de séparation (33).

11. Élément d'échange thermique (3) selon l'une quelconque des revendications précédentes, dans lequel les déformations (57, 59, 61, 63) sont réalisées par emboutissage.

12. Élément d'échange thermique (3), dans lequel au moins certaines déformations (57, 59, 61, 63) présentent une protubérance (65), telle qu'en forme de têton.

13. Élément d'échange thermique (3) selon l'une quelconque des revendications précédentes, dans lequel lesdits canaux (35, 37) s'étendent respectivement selon une forme sensiblement en « I » ou en « U ».

14. Élément d'échange thermique (3) selon l'une quelconque des revendications précédentes, dans lequel lesdites première (29) et deuxième (31) plaques présentent respectivement deux canaux (35, 37) de circulation de fluide s'étendant en formant des ondulations, dans lequel les ondulations desdits deux canaux (35, 37) sont complémentaires.

15. Échangeur thermique (1) entre au moins des premier et deuxième fluides, comportant un faisceau pourvu d'au moins un élément d'échange thermique (3) conforme à l'une quelconque des revendications précédentes.

16. Échangeur thermique (1) selon la revendication précédente, utilisé comme évaporateur dans un circuit de climatisation.

## Patentansprüche

1. Wärmetauscherelement, das Folgendes umfasst:
- wenigstens eine erste Platte (29) und eine zweite Platte (31), wobei die erste Platte (29) wenigstens einen ersten Kanal (35) für die Zirkulation eines ersten Fluids, der eine im Wesentlichen gewellte allgemeine Form besitzt, und die zweite Platte (31) wenigstens einen zweiten Kanal (37) für die Zirkulation des ersten Fluids, der eine im Wesentlichen gewellte allgemeine Form besitzt, aufweist, und
- eine Trennplatte (33), die zwischen die erste (29) und die zweite (31) Platte eingefügt ist,
**dadurch gekennzeichnet, dass** die Trennplatte (33) Folgendes umfasst:
- eine im Voraus definierte Anzahl von Verformungen (57, 59, 61, 63), die auf Höhe der jeweiligen gekrümmten Zonen einer Welligkeit des ersten (35) bzw. des zweiten (37) Zirkulationskanals angeordnet sind.

2. Wärmetauscherelement (3) nach Anspruch 1, wobei:
- die erste (29) und die zweite (31) Platte jeweils wenigstens einen Vorratsbehälter (43, 44, 45, 46) für ein Wärmespeichermaterial in Kontakt mit dem wenigstens einen ersten (35) bzw. zweiten (37) Zirkulationskanal für einen Wärmeaustausch zwischen dem Speichermaterial und dem ersten Fluid aufweisen, und wobei
- die Trennplatte (33) wenigstens eine Reihe von Öffnungen (49, 51, 53) umfasst, die eine Kommunikation zwischen den Kanälen (35, 37) und/oder den Vorratsbehältern (43, 44, 45, 46) der ersten (29) und der zweiten (31) Platte herstellen.

3. Wärmetauscherelement (3) nach Anspruch 2, wobei die Verformungen (57, 59, 61, 63) und die Öffnungen (49, 51, 53) verschachtelt sind.

4. Wärmetauscherelement (3) nach einem der vorhergehenden Ansprüche, das Folgendes umfasst:
- mehrere erste Verformungen (57), die zu der ersten Platte (29) orientiert sind und auf Höhe der gekrümmten Zonen der Welligkeiten eines ersten Zirkulationskanals (35) angeordnet sind, und
- mehrere zweite Verformungen (59), die zu der zweiten Platte (31) orientiert sind und in den gekrümmten Zonen der Welligkeiten eines zweiten Zirkulationskanals (37) angeordnet sind.

5. Wärmetauscherelement (3) nach dem vorhergehenden Anspruch, wobei die Welligkeiten eines ersten Kanals (35) und eines zweiten Kanals (37), die einander gegenüberliegen, eine entgegengesetzte Phase aufweisen, und wobei die ersten Verformungen (57) eine Oszillationsbahn beschreiben, deren Phase zu jener der Oszillationsbahn, die durch die zweiten Verformungen (59) beschrieben wird, entgegengesetzt ist.

6. Wärmetauscherelement (3) nach einem der vorhergehenden Ansprüche, das Verformungen (61, 63) umfasst, die an wenigstens einem Ende der Trennplatte (33) gebildet sind.

7. Wärmetauscherelement (3) nach den Ansprüchen 4 und 6, das wenigstens eine dritte Verformung (61) umfasst, die an wenigstens einem Ende der Trennplatte (33) auf Höhe des Beginns der Welligkeit eines ersten Kanals (35) gebildet ist, und wenigstens eine vierte Verformung (63) umfasst, die an wenigstens einem Ende der Trennplatte (33) auf Höhe des Beginns der Welligkeit eines zweiten Kanals (37) gebildet ist.

8. Wärmetauscherelement (3) nach dem vorhergehenden Anspruch, wobei die dritte (61) und die vierte (63) Verformung Abmessungen aufweisen, die kleiner sind als die Abmessungen der ersten (57) und der zweiten (59) Verformungen.

9. Wärmetauscherelement (3) nach einem der vorhergehenden Ansprüche, wobei die Verformungen (57, 59) im Wesentlichen eine Nierenform haben.

10. Wärmetauscherelement (3) nach einem der vorhergehenden Ansprüche, wobei die Verformungen (57, 59, 61, 63) in Bezug auf die Ebene der Trennplatte (33) vorstehen.

11. Wärmetauscherelement (3) nach einem der vorhergehenden Ansprüche, wobei die Verformungen (57, 59, 61, 63) durch Pressen verwirklicht sind.

12. Wärmetauscherelement (3), wobei wenigstens bestimmte Verformungen (57, 59, 61, 63) eine Erhebung (65), etwa in Kappenform, aufweisen.

13. Wärmetauscherelement (3) nach einem der vorhergehenden Ansprüche, wobei sich die Kanäle (35, 37) im Wesentlichen "I"- bzw. "U"-förmig erstrecken.

14. Wärmetauscherelement (3) nach einem der vorhergehenden Ansprüche, wobei die erste (29) und die zweite (31) Platte jeweils zwei Fluidzirkulationskanäle (35, 37) aufweisen, die sich wellenförmig erstrecken, wobei die Welligkeiten der zwei Kanäle (35, 37) komplementär sind.

15. Wärmetauscher (1) zwischen wenigstens einem ersten und einem zweiten Fluid, der ein Bündel umfasst, das mit wenigstens einem Wärmetauscherelement (3) nach einem der vorhergehenden Ansprüche versehen ist.

16. Wärmetauscher (1) nach dem vorhergehenden Anspruch, der als Verdampfer in einem Klimatisierungskreis verwendet wird.

## Claims

1. Heat exchange element comprising :
- at least one first plate (29) and one second plate (31), the first plate (29) having at least one first channel (35) for the circulation of the first fluid which has a substantially undulating general shape and the second plate (31) having at least one second channel (37) for the circulation of the first fluid which has a substantially undulating general shape, and
- a separator plate (33) interposed between the first plate (29) and the second plate (31),
**characterized in that** the separator plate (33) has :
- a predefined number of deformations (57, 59, 61, 63) respectively arranged in line with the curved zones of an undulation of a first circulation channel (35) or a second circulation channel (37).

2. Heat exchange element (3) according to Claim 1, in which :
- said first plate (29) and said second plate (31) respectively have at least one reservoir (43, 44, 45, 46) for a heat storage material in contact with said at least one first circulation channel (35) or second circulation channel (37) for a heat exchange between the storage material and the first fluid and in which
- the separator plate (33) comprises at least one series of orifices (49, 51, 53) placing said channels (35, 37) and/or said reservoirs (43, 44, 45, 46) of the first plate (29) and the second plate (31) in communication with one another.

3. Heat exchange element (3) according to Claim 2, in which said deformations (57, 59, 61, 63) and said orifices (49, 51, 53) are interposed between one another.

4. Heat exchange element (3) according to any one of the preceding claims, comprising :
- a plurality of first deformations (57) oriented toward the first plate (29) and arranged in the region of the curved zones of the undulations of a first circulation channel (35), and
- a plurality of second deformations (59) oriented toward the second plate (31) and arranged at the curved zones of the undulations of a second circulation channel (37).

5. Heat exchange element (3) according to the preceding claim, in which the undulations of a first channel (35) and an opposing second channel (37) are in phase opposition, and in which the first deformations (57) describe an oscillating path in phase opposition with the oscillating path described by the second deformations (59).

6. Heat exchange element (3) according to any one of the preceding claims, comprising deformations (61, 63) formed on at least one end of the separator plate (33).

7. Heat exchange element (3) according to Claims 4 and 6, comprising at least one third deformation (61) formed on at least one end of the separator plate (33) in the region of the start of the undulation of a first channel (35), and at least one fourth deformation (63) formed on at least one end of the separator plate (33) in the region of the start of the undulation of a second channel (37).

8. Heat exchange element (3) according to the preceding claim, in which the third deformations (61) and fourth deformations (63) have smaller dimensions than the dimensions of the first deformations (57) and second deformations (59).

9. Heat exchange element (3) according to any one of the preceding claims, in which the deformations (57, 59) are substantially kidney-shaped.

10. Heat exchange element (3) according to any one of the preceding claims, in which the deformations (57, 59, 61, 63) protrude relative to the plane of the separator plate (33).

11. Heat exchange element (3) according to any one of the preceding claims, in which the deformations (57, 59, 61, 63) are produced by stamping.

12. Heat exchange element (3) in which at least some of the deformations (57, 59, 61, 63) have a protuberance (65) which is, for example, nipple-shaped.

13. Heat exchange element (3) according to any one of the preceding claims, in which said channels (35, 37) respectively extend in a substantially "I-shaped" or "U-shaped" manner.

14. Heat exchange element (3) according to any one of
the preceding claims, in which said first plate (29) and said second plate (31) respectively have two fluid circulation channels (35, 37) which extend so as to form undulations, in which the undulations of said two channels (35, 37) are complementary.

15. Heat exchanger (1) between at least the first and second fluids, comprising a bundle provided with at least one heat exchange element (3) according to any one of the preceding claims.

16. Heat exchanger (1) according to the preceding claim, used as an evaporator in an air-conditioning circuit.
